# EUROPEAN PATENT APPLICATION

(11) **EP 1 733 620 A1**
(43) Date of publication of application: **20.12.2006**
(21) Application number: 05727745.1
(22) Date of filing: 29.03.2005
(51) Int. Cl.: A22C 21/00

(54) **METHOD AND DEVICE FOR SEPARATING CHICKEN WING FROM BREAST MEAT WITH CHICKEN WING**

(30) Priority: 31.03.2004 WO PCT/JP2004/004686
(71) Applicant: Mayekawa Mfg. Co., Ltd., Tokyo 135-0046 (JP)
(72) Inventor: SEKIGUCHI, Mitsuaki, Koto-ku, Tokyo 1350046 (JP); IGAWA, Shouji, Koto-ku, Tokyo 1350046 (JP)
(74) Representative: Strehl Schübel-Hopf & Partner
(86) International application number: PCT/JP2005/005804
(87) International publication number: WO 2005/094596

(57) **Abstract**

A chicken swing separation method and apparatus is provided wherein a poultry size tolerance (joint radius variation) is wide. In the pre-process step, the bone is removed from the breast meat. Then, the breast meat with chicken wing is supported at the left and right arm pits in such a manner that the arm pits are held in parallel to a direction vertical to the helical moving axes. The tendon of the breast meat is pushed to the board guide slanted toward the inner center between the helical moving axes. The posture of the breast meat is fixed by the gradually increasing pressure from the slanted board guide and the chicken joint is cut off by the rotary blade disposed near the board guide, thereby separating the chicken wing from the breast meat.

## Description

### Technical Field

The present invention relates to a method and device for separating chicken wing from a breast meat with a chicken wing, particularly to the method and device wherein the bones at the breast meat are removed and the chicken wing is efficiently separated from the breast meat to which the chicken wing is attached through the shoulder joint.

### Background Art

The chicken wing is used for the grilled chicken, stewed chicken and so on, while the breast meat without chicken wing is used for the deep-fried breaded cutlet, the chicken salad and so on. Their usages for cooking are diversitified. Thus, the chicken wing is sold separately from the breast meat without chicken wing.
The breast meat without the chicken wing is sold at a price higher than the chicken wing. Accordingly, as disclosed in JP2-27938A (1990), the left and right wings are cut from the upper body of the poultry in such a manner that the maximum quantity of the breast meat is obtained.

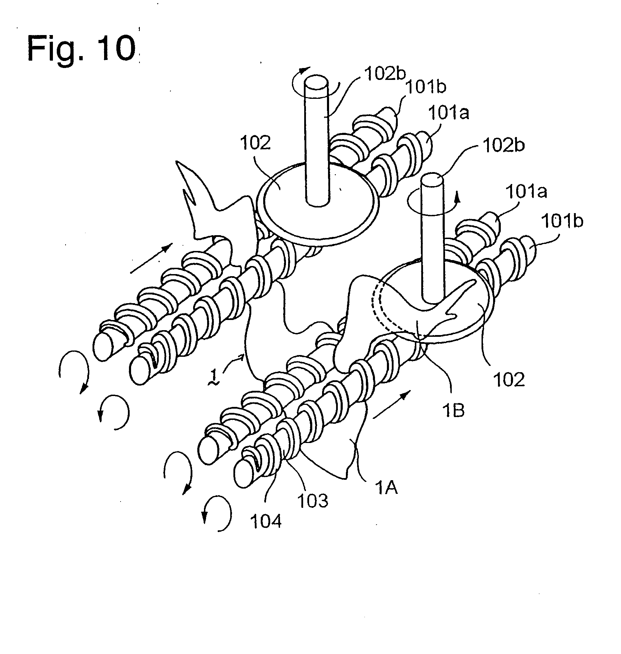

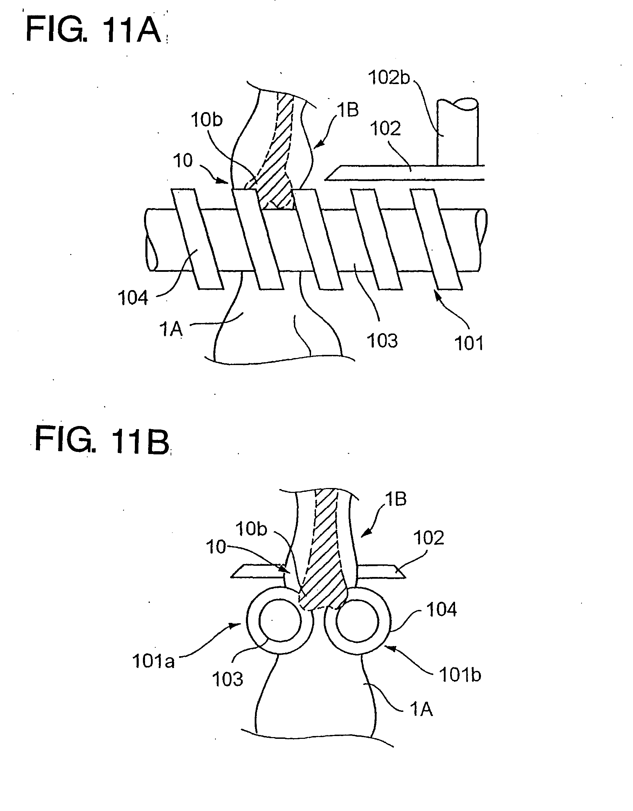

The above-mentioned prior art is explained, referring to FIG. 10, FIG. 11A and FIG. 11B. Here, FIG. 10 is a detailed perspective view of a cutting apparatus for cutting the left and right chicken wings from the breast meat. FIG. 11A and FIG. 11B are enlarged views of the rotary cutting unit, wherein FIG.11A is a side view along the moving axis and FIG.11B is an elevational view along the moving axis. A pair of screw axes 101a and 101b which support a lower portion of the shoulder joint of the chicken wing 1B disposed at the left and right sides in the horizontal plane. A pair of helical moving axes 101 rotate along opposite directions with each other. Further, vertical grooves 103 of left and right helical shape extend along the helical moving axes 101a and 101b.

There is disposed, at the upper plane of the down stream of the rotary moving axes 101a and 101b, disc rotary blades 102 which are rotated by rotation axes 102b in such a manner that they move away at the chicken work cutting position, i.e., along the opposite direction and moreover along the outer circumferential direction.

Next, the operation of the above-mentioned prior art is explained. First, by using a not-shown conveyer and gambrel, the chicken wings 1B of the breast meats 1 with the chicken wings are directed upward along a direction vertical to the axes and moreover in the horizontal plane at the left and right sides. The chicken wings 1B are introduced into a pair of left and right helical axes 101a and 101b. Thus, the knuckle portions (shoulder joint 10) at the roots of the chicken wings 1B are put between the moving axes 101a and 101b. Thus, the breast meats 1 are stretched along a direction vertical to the moving direction and are moved toward the rotary blade, by rotating the helical moving axes 101a and 101b along allow directions as shown in FIG. 10.

The left and right wings of the chicken wings 1B freely rotate in relation to the breast meat 1A and the tendons at the lower sides of the shoulder joints 10 are cut by the rotary blade 102. Thus, the left and right wings are moved from the back sides to the breast sides and are separated from the breast meats 1A.
However, in the prior art as shown in FIG. 10, the left and right wings of the chicken wings 1B can rotate freely in relation to the breast meats 1A. Further, the lower portions of the shoulder joints 10 are put between the helical grooves 103 of a pair of the helical moving axes 101, and the chicken wings 1B are cut by the rotary blades 102, 102 at the upper edges of the grooves 104, 104. Accordingly, the skin on the surface of the breast meat escapes between the rotary blade 102 and the groove valley 103 (between the grooves 104 on the helical moving axes 101a and 101b). Particularly, if the rotary blades 102 become blunted, the chicken wing1B may possibly be imperfectly separated from the breast meat 1A.

Further, as shown in FIGs. 11A and 11B, the lower sides of the shoulder joints 10 of the roots of the chicken wings 1B are moved toward the rotary blades 102 which are positioned over the upper edges of the groove lands of the helical grooves 104. Accordingly, the rotary blades may not possibly be smoothly inserted into the joint tissue (tendon) of the shoulder joints 10, thereby erroneously cutting the bones 10b of the roots of the chicken wings 1B of the upper ends of the shoulder joints 10.

Particularly, in the background art, the breast meat with the chicken wing is moved by utilizing the rotation of the helical grooves of the two moving axes 101a and 101b. Therefore, the downward forces are always acted on the shoulder joints 10. Accordingly, the roots of the chicken wings 1B of the shoulder joints are easily pulled into the helical grooves 103 and the large radius joint bone portions 10b are easily pulled into the helical grooves 103, thereby not only crushing the joint bone portions 10b by the pressures from the helical moving axes 101a and 101bs, but also cutting the breast meat at the uppermost joint bone portions 10b of the roots of the chicken wings 1B. Those breast meats are not of good quality.

Further, processing range of the meat size (radius of the joint portion) is narrow, because the distance between the parallel helical moving axes 101a and 101b is fixed. Accordingly, the distance between the helical moving axes 101a and 101b should be finely adjusted, in order to avoid the above-mentioned pulling-in of the joint bone portion 10b of the joint portion 10 into the helical moving axes 101a and 101b. Thus, the operation of the apparatus becomes complicated.
Patent document 1 : JP2-27938A (1990)
Patent document 2 : JP10-66504A (1998)

### Disclosure of the Invention

### Problems to be solved

The inventors of the present invention disclosed in patent document 2 (JP10-66504A (1998)) an automatic apparatus for producing the breast meat with the chicken wing to which the chicken wing is attached through the shoulder joint.
The present invention provide a method and device for separating the chicken wing, wherein the tolerance of the chicken size (the radius of the joint portion) is wide, the bone portion of the root of the chicken wing 1B of the upper end side of the shoulder joints not erroneously cut, and the product is of good quality. The apparatus of the present invention is used singly or together with the automatic apparatus of patent document 2.

### Means to solve the Problems

The present invention, in order to solve the above-mentioned problems, is a chicken wing separation method wherein bone of a breast meat side is removed in a pre-process step, but a chicken wing is still attached to the breast meat, which comprises the steps of: supporting the breast meat with chicken wings at two points from arm pits on two parallel helical moving axes, left and right of the chicken wings being parallel along a direction vertical to the two parallel helical moving axes; positioning tendons of the breast meat corresponding to the arm pits by board guides extending along and above the helical moving axes; and cutting joints of the chicken wings by rotary blades disposed near the board guides.

According to the present invention, a distance between the board guides may be made gradually narrower along a moving direction of helical grooves of the helical moving guides; and the tendons may be positioned by pushing the board guides toward the tendons.

The breast meat may be pushed by pushing forces toward the helical moving axes directly in front of the rotary blades. The pushing forces may be generated by gravity forces fluctuated upward or downward toward upper surfaces of the helical moving axes.

The board guides may be slanted toward inner center between the helical moving axes; and the joints of the chicken wings may be cut by the rotary blades disposed near the slanted plane. An outer side surface of the slanted plane may have a hollow at a position where the rotary blades is disposed; and cutting the joints of the chicken wings by the rotary blades.

The chicken wing separation method of the present invention may have the steps of grasping the breast meat with chicken wing separated from a body in the pre-process step, the body being grasped by a grasping apparatus; delivering the breast meat to a delivering apparatus, the breast meat being still grasped by the grasping apparatus; and introducing the breast meat with chicken wing into a chicken wing separation step. Thus, it is facilitated to continuously execute processes from bone separation of the upper body of the slaughtered poultry to the chicken wing separation.

In a chicken wing separation apparatus, a bone is removed from a breast meat in a pre-process step and the breast meat with chicken wing is transported by helical moving axes. The chicken wing separation apparatus comprises: two parallel helical moving axes for supporting the breast meat with chicken wing at two points from arm pits on two parallel helical moving axes, left and right of the chicken wings being parallel with along a direction vertical to the two parallel helical guide moving axes; board guides extending along and above the helical moving axes; and rotary blades disposed near outer side surfaces of the board guides, wherein: the breast meat with chicken wing is positioned and supported, by rotations of the two parallel helical moving axes, between the board guides; the breast meat with chicken wing is transported toward the rotary blades; and left and right wing of the chicken wing are cut by the rotary blades and are separated from the breast meat. The board guides may be made gradually narrower along a moving direction of helical grooves of the helical moving guides; and the board guides are slanted toward inner center between the helical moving axes. The chicken wing separation apparatus may further comprises a pushing force generation means for pushing the breast meat toward the helical moving axes directly in front of the rotary blades.

The pushing force generation means may comprise: left and right rotating support arms supported by the left and right board guides, respectively; left and right weights or springs disposed on left and right upper surfaces of the left and right support arms for giving pressures to the left and right rotating support arms, respectively; and left and right breast meat pressing members of rollers or sleighs disposed at left and right lower sides of the left and right rotating support arms which the breast meat contacts.

The board guides may be slanted, at least at a position of the rotary blade, toward inner center between the helical moving axes; and there is formed on an outer side of the board guide a hollow for receiving the rotary blade and disposing the rotary blade in parallel to an outer side surface of the board guide. The chicken wing separation apparatus may further comprise guide bars disposed, in parallel to the helical moving axes, and moreover obliquely under and at outer sides of the helical moving axes, wherein the guide bars are bent toward outer sides in order to avoid interference with the rotary blades.

The chicken wing separation apparatus may further comprise a delivery apparatus for introducing, into the helical moving axes, the breast meat with chicken wing separated from a body which is grasped by a grasping apparatus, in a pre-process step for separating a bone of the breast meat, the delivery apparatus comprising: a receiving space for receiving the breast meat with chicken wing; a pair of guide frames, wherein an opening is provided at a breast meat separation step side for receiving, at the receiving space, the breast meat with chicken wing, chicken wing roots of the breast meat with chicken wings are being still grasped by the grasping apparatus, and the breast meat with chicken wing is introduced into the helical moving axes along guide routes; and left and right pushing-in means for pushing out the breast meat with chicken wing introduced into the space toward the helical moving axes along introduction routes.

By employing the above-mentioned delivery apparatus for delivering the breast meat separated from the upper body of the slaughtered poultry to the chicken wing separation apparatus receiving the breast meat with chicken wing, a process line for continuously executing the bone separation and the chicken wing separation can be constructed.

Each of the guide route may comprise: a liner guide route opened at the breast meat separation step side; and an arch guide route connected with a downstream of the linear guide route, wherein there is, between the linear guide route and the arch guide route, a step for stopping the breast meat of which chicken wing root is grasped by the grasping apparatus, and the pushing-in means comprises: a pushing-in arm for holding, at the opening of the linear guide route, the breast meat with chicken wing stopped at the step, being disposed reciprocating along the linear guide route in a space between the guide frames; and left and right rotating arms for pushing the breast meat with chicken wing stopped at the step into the helical moving axes through left and right of the arch guide routes.

Thus, the breast meat grasped by the chicken wing root by the grasping apparatus once stops at the step portion. The push-in arm holds the stopped breast meat and the delivery apparatus stops grasping the breast meat and returns back. Further, the breast meat is pushed into the helical moving axes through the arch guide route by using the rotation arm. Thus, the breast meat with chicken wing which arrived at the start point of the helical moving axes is processed by the chicken wing separation by the chicken wing separation apparatus.

### Advantage of the Invention

The joint tissue (tendon) under the shoulder joint of the breast meat with chicken wing is intensely pressed between the board guide and the helical moving axis and is carried to the rotary blade by the rotation of the helical axis. However, the board guide is not rotated, in other words the breast meat slides on the board guide surface. Therefore, the chicken wing does not rotate in relation to the breast meat, i.e., the posture of the breast meat is fixed. Therefore, the shoulder joint is not pulled into the helical moving axis.

The board guide is slanted toward the inner center between the helical moving guides from the extending direction of the board guide, the distance between the board guide and the helical moving axis becomes smaller, as the breast meat approaches the rotary blade. Therefore, the rotary blade can touch the breast meat which is well fixed.

Thus, there is wide tolerance of the radius of the joint bone supportable in a state wherein the posture of the breast meat is well fixed, even when the board guide is elastically deformed. Therefore, it is not required to finely adjust the distance between the board guide and the helical moving axis, thereby simplifying the apparatus operation and facilitating the automatic processing.

Further, due to the elastic board guide, the joint bone of large poultry is not damaged and precisely positioned. Accordingly, the bone of the upper shoulder joint of the chicken wing root is never cut, even when the position error between the rotary blade and the support point of the board guide occurs. Further, the bone of the upper shoulder joint of the chicken wing root is not erroneously cut, because the rotary blade smoothly intrudes the joint tissue (tendon) of shoulder joint. Therefore, the products of no good quality are greatly reduced. Further, due to the hollow formed at the board guide, the rotary blade comes very close to the support position of the board guide. Therefore, the bone of the shoulder joint is hardly cut.

According to the stable holding of the skin by the corner of the board guide, the skin does not escape to the valley of the helical moving axis, when it is cut. Therefore, the chicken wing is completely cut from the breast meat, even when the rotary blade is not sharp.
Further, according to the pressuring unit (for example, the roller or sleigh) directly in front of the rotary blade for giving the breast meat to the pressure to the helical moving axis by utilizing the weight and spring inside the board guide, the breast meat is more intensely pulled into the helical moving axis, thereby exerting a force in such a direction that the breast meat is separated from the rotary blade. Thus, it was found out that the breast meat quantity left at the shoulder joint of the cut off chicken wing is further minimized.
Further, it was found out that the poultry is automatically processed in spite of its size, because the pressuring unit (the roller or sleigh) has a degree of freedom along the direction approaching or separating to or from the upper surface of the helical moving axis, in response to the thickness of the breast meat.

Further, according to the above-mentioned pressuring unit (roller, sleigh), it was found that the chicken wing is stably separated from the breast meat, although the operator might possibly cut off a lot of the breast meat left around the chicken wing, particularly in accordance with the regulation of the circulating community of the chicken wing.

Preferably in the present invention, the chicken wing separation apparatus may further comprise a delivery apparatus for introducing, into the helical moving axes, the breast meat with chicken wing separated from a body which is grasped by a grasping apparatus, in a pre-process step for separating a bone of the breast meat, the delivery apparatus comprising: a receiving space for receiving the breast meat with chicken wing; a pair of guide frames, wherein an opening is provided at a breast meat separation step side for receiving, at the receiving space, the breast meat with chicken wing, chicken wing roots of the breast meat with chicken wings are being still grasped by the grasping apparatus, and the breast meat with chicken wing is introduced into the helical moving axes along guide routes; and left and right pushing-in means for pushing out the breast meat with chicken wing introduced into the space toward the helical moving axes along introduction routes. Therefore, a processing line can be constructed for delivering the breast meat separated from the upper body of the slaughtered poultry to the chicken wing separation apparatus for receiving the breast meat with chicken wing and continuously executing the bone separation and the chicken wing separation.

More preferably in the present invention, each of the guide route may comprise: a liner guide route opened at the breast meat separation step side; and an arch guide route connected with a downstream of the linear guide route, wherein there is, between the linear guide route and the arch guide route, a step for stopping the breast meat of which chicken wing root is grasped by the grasping apparatus, and the pushing-in means comprises: a pushing-in arm for holding, at the opening of the linear guide route, the breast meat with chicken wing stopped at the step, being disposed reciprocating along the linear guide route in a space between the guide frames; and left and right rotating arms for pushing the breast meat with chicken wing stopped at the step into the helical moving axes through left and right of the arch guide routes. The breast meat with chicken wing is surely delivered from the breast separation step to the chicken wing separation step by employing the simple delivery apparatus.

According to the present invention as explained above, a chicken wing separation apparatus is provided, wherein the poultry size tolerance (joint radius tolerance) is wide and the no good products due to the erroneous cutting of the bone of the upper shoulder joint are few.
Further, according to the slanted guide and the hollow formed thereon, the gap between the board guide and the rotary blade becomes narrow. Thus, the chicken wing is surely cut off and separated from the breast meat.

### Brief description of drawings

FIG. 1 is a conceptual view of Embodiment 1 of a chicken separating apparatus of the present invention, and is a detailed perspective view of the apparatus for separating the left and right wings of the chicken wing from the breast meat.
FIG. 2A is a conceptual view of Embodiment 1 of the chicken separating apparatus of the present invention, and is a cross sectional view at the upstream of the rotary blade as shown in FIG. 1.
FIG. 2B is a conceptual view of Embodiment 1 of the chicken separating apparatus of the present invention, and is a cross sectional view at the position of the rotary blade as shown in FIG. 1.
FIG. 3 is a cross sectional view seen from a side along X-X as shown in FIG. 4 of an automatic bone separation apparatus for an upper body of a slaughtered poultry.
FIG. 4 is a schematic arrangement of the station group as shown in FIG. 3.
FIG. 5A is a conceptual view of a station 5ST as shown in FIG. 4.
FIG. 5B is an illustration of the breast meat separation.
FIG. 6A is an elevational view showing an operational sequence of the delivery apparatus 40.
FIG. 6B is the elevational view showing the operational sequence of the delivery apparatus 40.
FIG. 6C is the elevational view showing the operational sequence of the delivery apparatus 40.
FIG. 6D is the elevational view showing the operational sequence of the delivery apparatus 40.
FIG. 7 is a cross sectional view of FIG. 6A shown along Y-Y.
FIG. 8 is a perspective view of a principal part of a chicken wing separation apparatus of Embodiment 2 for separating the left and right wings of the chicken wing from the breast meat.
FIG. 9A is a cross sectional view of the chicken wing separation apparatus of Embodiment 2 along the board guide as shown in FIG. 3.
FIG. 9B is a cross sectional view of the chicken wing separation apparatus of Embodiment 2 near rotary blade as shown in FIG. 3.
FIG. 10 is a detailed perspective view of a conventional apparatus for cutting the left and right wings of the chicken wing from the breast meat.
FIG. 11A is an enlarged side view along the moving axis of the rotary cutting unit as shown in FIG. 10.
FIG. 11B is an enlarged elevational view along the moving axis of the rotary cutting unit as shown in FIG. 10.

### Description of Reference Numerals

- 1: BREAST MEAT WITH CHICKEN WING
- 1A: BREAST MEAT
- 1B: CHICKEN WING
- 1Bb: CHICKEN WING TIP
- 2: ROTARY BLADE
- 2b: ROTATION AXIS OF ROTARY BLADE
- 3: HELICAL GROOVE LAND
- 4: HELICAL GROOVE VALLEY
- 5: HELICAL AXIS
- 6: BOARD GUIDE
- 6a: INLET GUIDE
- 6b: HOLLOW PORTION
- 7: GUIDE BAR
- 7b: BENT PORTION
- 9: GUIDE SPACE

### Best Mode for Carrying Out the Invention

The present invention is explained, referring to the drawings. It should be understood that the present invention is not limited to specifically described sizes, materials and relative arrangements and so on regarding the constituent components.

### Embodiment 1

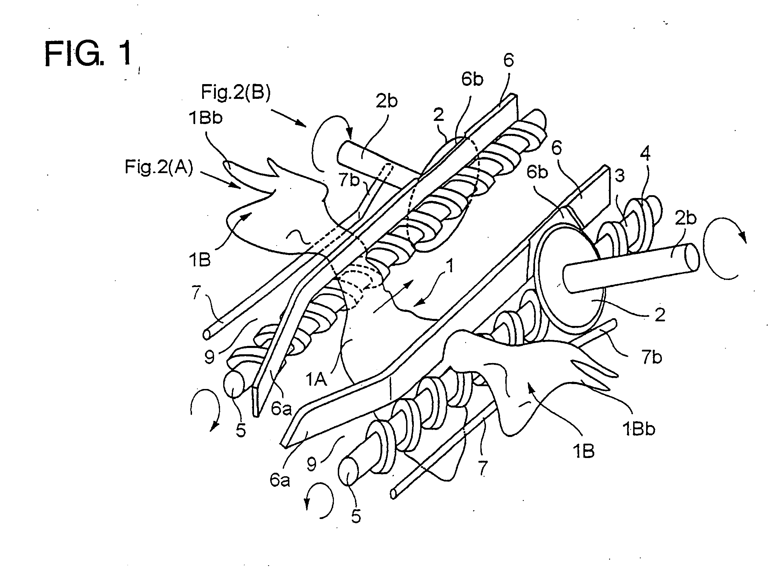

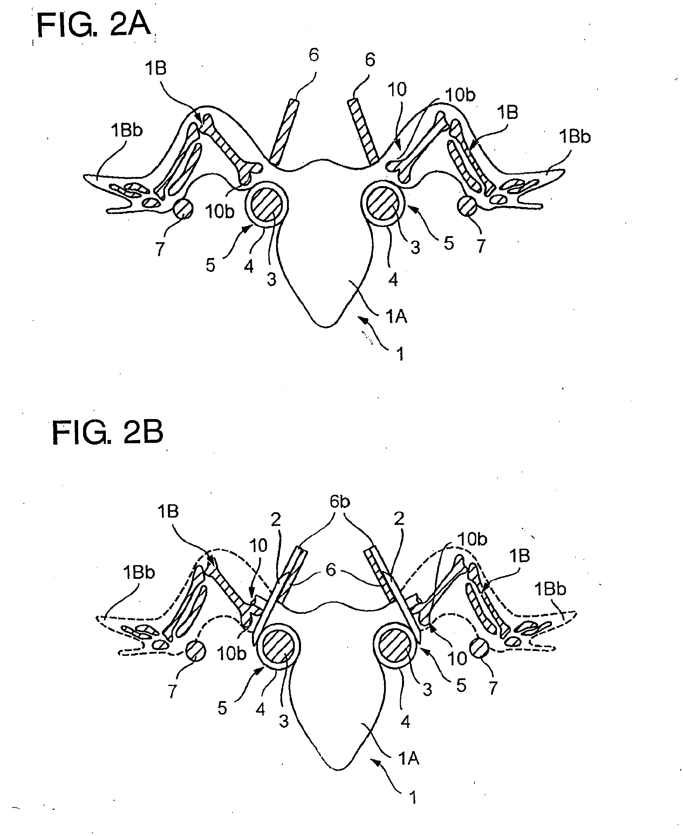

Embodiment 1 of the present invention is explained, referring to FIG.1 and FIG. 2 which show an outline of the chicken wing separation apparatus.
FIG. 1 is a detailed perspective view of the apparatus for separating the left and right wings attached to the breast meat. FIG. 2A is a cross sectional view at the upstream side of the rotary blade as shown in FIG. 1. FIG. 2B is a cross sectional view at the position of the rotary blade.

Reference numeral 5, 5 are parallel helical guide screw axes (helical moving axes which are disposed in parallel at the left and right side in the horizontal plane. The helical axes 5, 5 rotate oppositely toward the inner center between the two axes. The groove valleys 3 and groove lands 4 are provided on the two helical moving axes 5,5, respectively, thereby moving, toward the rotary blade, the breast meat.
Board guide 6, 6 are provided symmetrically at an inner upward oblique space of the helical moving axes 5, 5.

The inlet of the board guides 6,6 are bent by the inlet guide 6a toward the inner center direction between the two axes, thereby making the guide space 9 where joint tissue of the roots of the chicken wings 1B of the left and right wings (the tendon positioned at the breast meat) are inserted. Further, at the position of the rotary blade 2, the board guides 6,6 are slanted, slightly inward in relation to the vertical upward directions of the helical axis lines, in other words, slightly slanted outward toward the rotary blade sides.
That is, the board guides 6,6 are slanted, as if they were crossed at the upper space of the downstream end where they are slanted gradually.

There are the hollows 6b, 6b of stepped shapes on the outer side surface of the board guides 6,6 at position of the rotary blades 2, in order to make the rotary blades 2, 2 intrude the board guides 6, 6. Here, the board guides 6,6 are slanted inward, at their whole lengths, or only at the positions of the rotary blades 2, 2.
The rotary blades 2,2 are slightly slanted inward from the vertical direction in parallel to the board guides 6, in order to come close to the hollow portion 6b. Here, reference numeral 2b is the rotation axis of the rotary blade.
There are disposed guide bars 7, 7 in parallel to the helical moving axes 5,5 , at the outer lower oblique sides of the helical moving axes 5, 5. Further, there are disposed the outwardly bent portions 7b, 7b under the rotary blades 2, 2, in order to avoid interference between them.

Next, the distance between the two helical moving axes 5,5 is explained.
The above-mentioned distance is such that the shoulder joint tissue (wherein the bones of the breast meat 1A of the breast meat 1 with chicken wing are removed) can be supported by two points.
The distance between the guide bars 7,7 is such that the chicken wing tips 1Bb of the breast meat with the chicken wing 1 supported by the helical moving axes 5,5 can be pushed upward and widened.
The distance between the lower end of the board guide 6 and the helical moving axis 5 is such that the tendon of the breast 1A at the slightly inner portion of the shoulder joint from which the bone of the breast meat 1A was removed is intensely pressed.

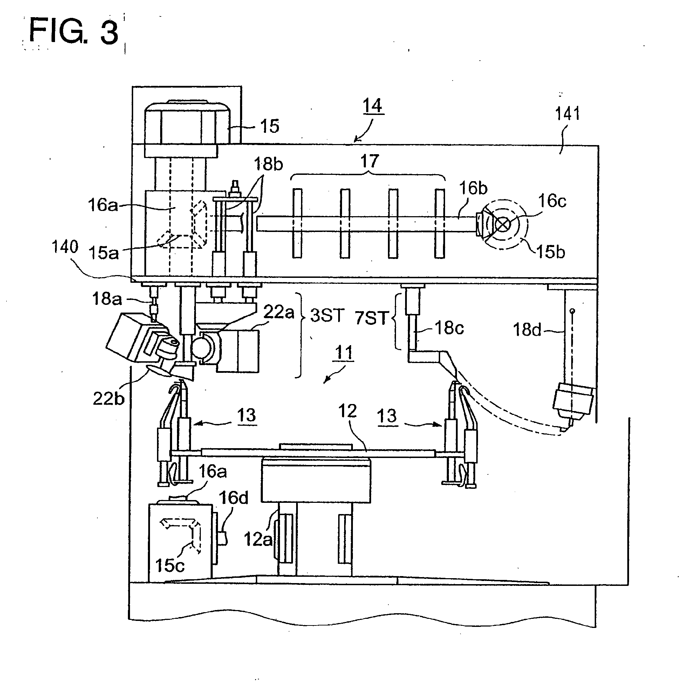

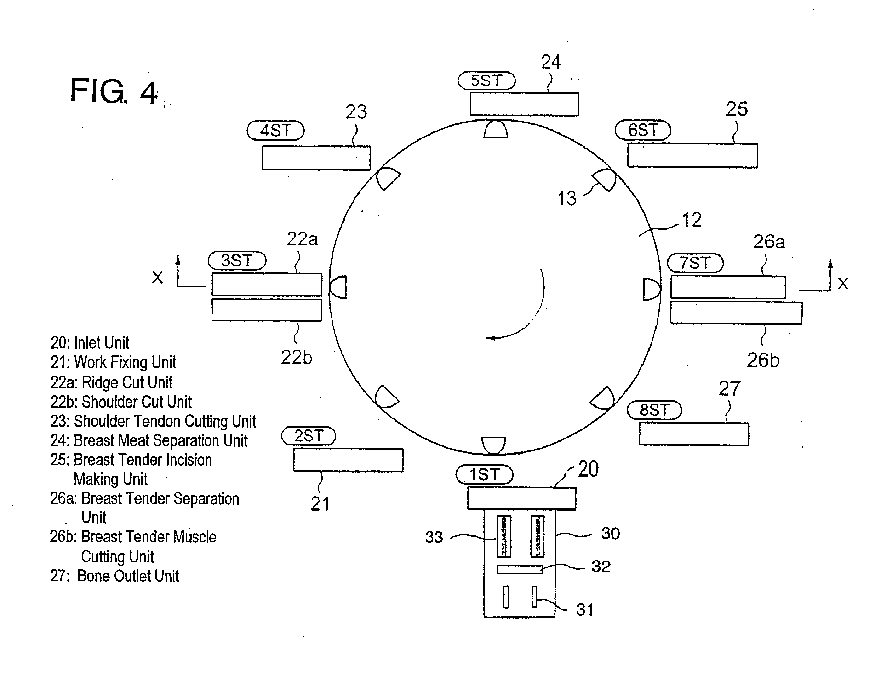

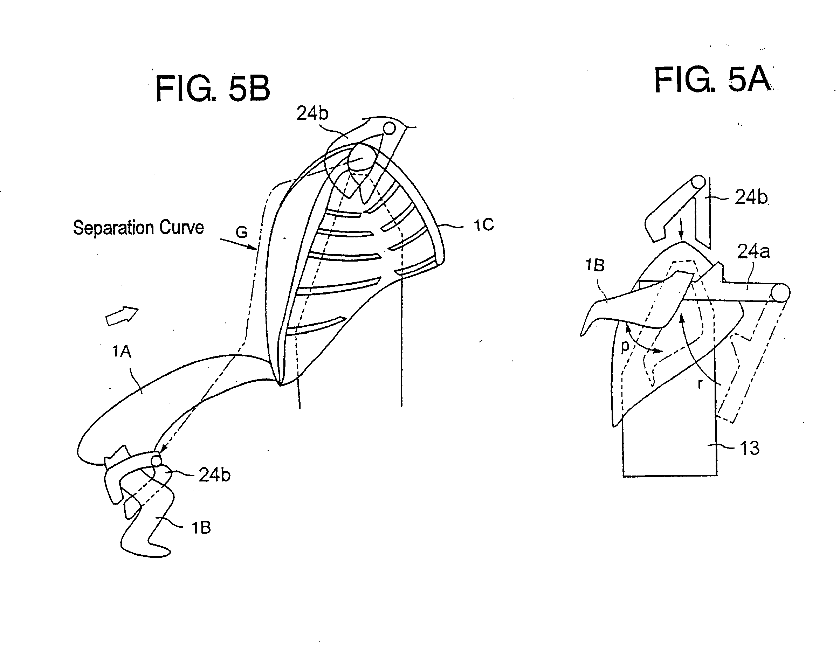

Next, a bone separation process of the slaughtered poultry as a pre-process step for the chicken wing separation apparatus of the present invention is explained. FIG. 3 is a cross sectional view seen from a side along X-X as shown in FIG. 4 showing an automatic bone separation apparatus for an upper body of a slaughtered poultry. FIG. 4 is a schematic arrangement of the station group as shown in FIG. 3. FIG. 5A is a conceptual view of a station 5ST as shown in FIG. 4. FIG. 5B is an illustration of the breast meat separation.

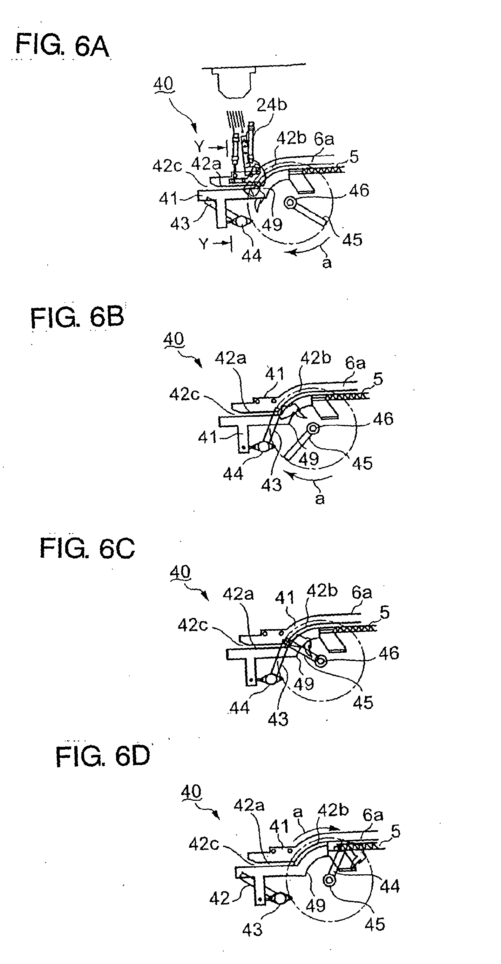

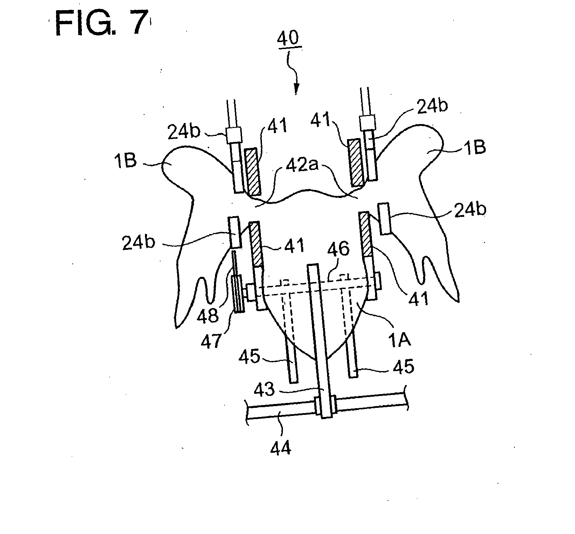

FIG. 6 is an elevational view showing an operation sequence of the delivery apparatus 40. FIG. 7 is a cross sectional view of FIG. 6A shown along Y-Y.

As shown in FIG. 3, an automatic bone separation apparatus for an upper body of a slaughtered poultry comprises a main tact transport process chamber 11, a group of eight stations and a cam mechanism 14.
The main tact transport process chamber 11 comprises rotating disc 12 which rotates every 45 degree through an intermittent motion driving mechanism 12a, and eight cones 13 disposed every 45 degree toward the exterior direction along the circumference of the rotating disc 12.

Further, as shown in FIG. 4, the group of stations for separating the bones comprises a pre-process unit (the skinning unit) 30 disposed in front of the chicken work inlet of the station 1ST and the stations 1ST through 8ST disposed at equal angles on the rotating disc 12. The stations 1ST through 8ST are disposed at the intermittent stopping positions of the rotating disc 12, in order to process the works fixed with the cones 13 on the rotating disc 12. Further, as shown in FIG. 4, the pre-process unit (skinning unit) 30 comprises: a spine cut unit 31 for the skinning; a lower surface skinning unit 32 for skinning the front breast meat of the work, and a side skinning unit 33 for skinning the root of the chicken wing (arm pit) left after the lower surface skinning. And an inlet unit 20 automatically inputs the chicken work which passes the side skinning unit 33 into the station 1ST (the moving body).

1ST is provided with the work inlet unit 20 for fitting the works in the cones 13. 2ST is provided with a work fixing unit 21 which set the work at a prescribed height. 3ST is provided with ridge cut unit 22a for cutting the back ridge of the fixed work and is provided with shoulder cut unit 22b for cutting into the surface skin of the upper shoulder. 4ST is provided with a shoulder tendon cutting unit 23 for cutting into between the shoulder joint 10 and upper arm bone head. 5ST is provided with a breast meat separation unit 24 for separating the breast meat 1A from the chicken wing 1B separated from the shoulder joint by cutting into the shoulder. 6ST is provided with a breast tender incision making unit 25 for cutting into the thin film between the breast tender. 7ST is provided with a breast tender separation unit 26a for chucking the upper end of the breast tender of which thin film is cut into and for separating the breast tender and is provided with the breast tender muscle cutting unit 26b. 8ST is provided with a bone outlet unit 27. Thus, the chicken work is intermittently moved in the main tact transport process unit 11. When the work is stopped, each processing and bone separation is executed at each station and the bone is exhausted from the final station.

As shown in FIG. 3 (a cross sectional view seen along X-X as shown in FIG. 4), there is provided, from the lower portion of a speed reduction motor 15, a vertical driving unit 16a. Further, the vertical driving axis 16a is provided, from the vertical driving axis 16a, through a bevel gear 15a, a transverse driving axis 16b in a ceiling space 141. Further, the transverse driving axis 16b is provided , through bevel bear 15b, with a longitudinal driving axis 16c. Further, the vertical driving axis 16a is provided, through a bevel gear 15c, a driving axis 16d in a lower process space 11. The driving axis 16d drives, through a not-shown conduct system, an intermittent driving unit 12a in the rotary disc 12.

Further, operation links 18a, 18b, 18c, 18d in the ceiling space 141 are introduced from a cam group 17 into the main tact transport process space 11. The operation links 18a and 18b are linked with a shoulder cut unit 22b and a ridge cut unit 22a in 3ST, respectively, while the operation links 18c and 18d are linked with the breast tender separation unit 26b in 7ST, thereby executing each process.

FIG. 5A is an outline of the breast meat separation unit 24 in 5ST as shown in FIG. 4. FIG. 5B shows a situation of the breast meat separation, wherein the left and right chicken wings 1B are pulled by the chuck, thereby separating from the body 1c the breast meat 1A together with chicken wings 1B. As shown in FIG. 5A, the breast meat separation unit 24 comprises: a pair of chicken wing catchers 24a, 24a for catching up the chicken wing 1B by incling upward from the arm pit; and a pair of chucks 24b, 24b for chucking the chicken wing roots wherein a gap is made in an arm pit per every catching-up process.

The gap in the arm pit is made by inclining the arm pit along "p" direction by inclining the chicken wing catcher 24a and then grasping the root of the chicken wing by dropping the chuck 24b in a free state. The chuck 24b grasping the root of the chicken wing by the cam mechanism descends along a separation curve G of a double dot line as shown in FIG. 5, thereby separating the breast meat from the chicken wing with a high yield.

FIG. 6 is an elevational view of the delivery apparatus 40 which delivers the breast meat to the chicken wing separation apparatus.
FIG. 7 is a cross sectional view seen along Y-Y as shown in FIG. 6A. Reference numeral 41 is a guide frame which has an opening 42c for receiving the breast meat with chicken wing 1 carried by the chuck 24b. The breast meat with chicken wing 1 is transported into the starting side of the helical moving axis 5 of the chicken wing separation apparatus, through a linear inlet 42a and an arc inlet 42b. Reference numeral 43 is a push-in arm which is disposed horizontally under the guide frame 41 and fixed with a reversibly rotating axis 44. The root of the chicken wing 1B is grasped by a pair of the chuck 24b and is inserted from the opening 42c into the linear inlet 42a. Then, the push-in arm 43 pushes in the beast meat with chicken wing 1 till it stops a step portion 49 at the boundary between the linear inlet 42a and the arc inlet 42b. The rotation axis 44 is provided with a not-shown air cylinder, thereby reversibly rotating the rotation axis 44.

Reference numerals 45, 45 are two rotation arms which are fixed with a rotation arm 46 provided between a pair of the guide frames 41. As shown in FIG. 7, there is provided at one end of the rotation arm 46 a wheel 47 rotated by a belt 48, thereby rotating the rotation arms 45, 45 at a prescribed speed along "a" direction. The push-in arm 43 is shifted along the axis direction for avoiding their collisions. Further, those arms are linked with the cam mechanism 14 in the bone separation apparatus for the upper body of the slaughtered poultry, thereby synchronizing with each apparatus in each process step.

Next, the operation of Embodiment 1 is explained.
In the pre-process step, the bone at the breast meat with chicken wing 1 is removed, but the left and right chicken wings 1B are left at the shoulder joint 10. In the breast meat separation unit 24, a pair of the chuck 24b grasps the root of left and right chicken wings 18, the chicken wing 1B is held upwardly with its left and right wings in the horizontal plane, and the breast meat with chicken wing 1 pass the opening 42a in the guide frame 41 and linear inlet 42a in the guide frame 41 and is stopped at the step 49.

Then, the push-in arm 43 rotates from the opening 42c, thereby pushing the breast meat with chicken wing 1 at the breast meat 1A. Simultaneously, the chuck 24b stops grasping the breast meat with chicken wing 1 and returns back to the bone separation apparatus.
Then, the rotation arm 45 rotates and carries the breast meat with chicken wing 1 through the arc inlet 42b and pushes it out to the start side of the helical moving axes 5, 5.
Here, the guide frame 41 of the delivery apparatus 40 may be unified with a frame which disposes the helical moving axes 5, 5 and the board guide 6a.

In the chicken wing separation apparatus, the chicken wing 1B of the breast meat with chicken wing 1 is held upwardly with left and right wings in the horizontal plane vertical to the axis direction, and is introduced from the inlet guide 6a of the board guides 6,6 into helical moving axes 5, 5. The shoulder joint tissue (tendon) of the breast meat 1A directly under the shoulder joint is held between the helical moving axes 5, 5 and the board guides 6, 6. The breast meat with chicken wing 1 is hung at a direction vertical to the moving direction and is carried to the rotary blade 2. During the carrying process, the chicken wing 1B does not freely rotate in relation to the beast meat 1A, i.e., its posture is limited, because the chicken wing tip 1Bb of the chicken wing 1B is widened by the guide bar 7.

The breast meat with chicken 1 is supported at the arm pits of the shoulder joints 10 by the left and right points with the left and right wings in parallel along the vertical direction to the helical moving axes 5, 5 and the tendon of the breast meat 1A is pushed to the lower corner portion of the board guides 6, 6, thereby positioning the breast meat with chicken wing 1 by utilizing the gradually increasing pressure by the slant taper angle of the board guides 6, 6. The tendon inside the shoulder joint 10 is cut by the rotary blade which intrudes the hollow 6b of the board guide 6, thereby separating the breast meat from the chicken wing 1B. After separating, the breast meat supported at the two points by the board guide 6 and helical moving axis 5 is forwarded to a post-process step.

### Embodiment 2

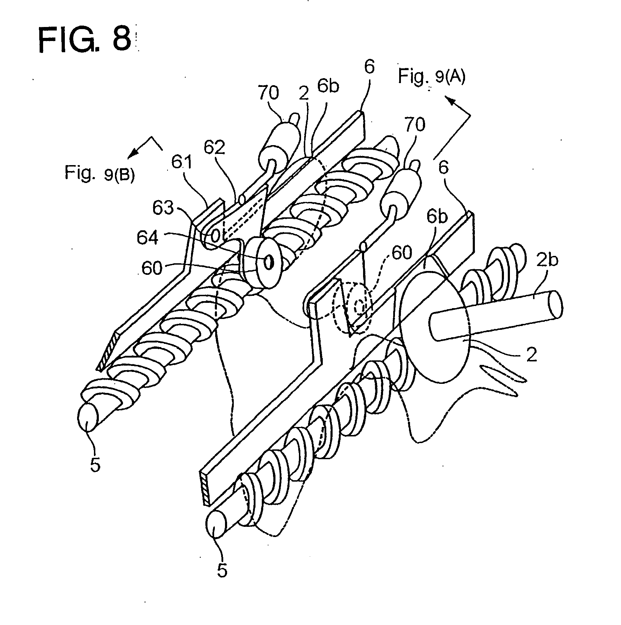

Embodiment 2 is explained, referring to FIG. 8 ~FIG. 9.

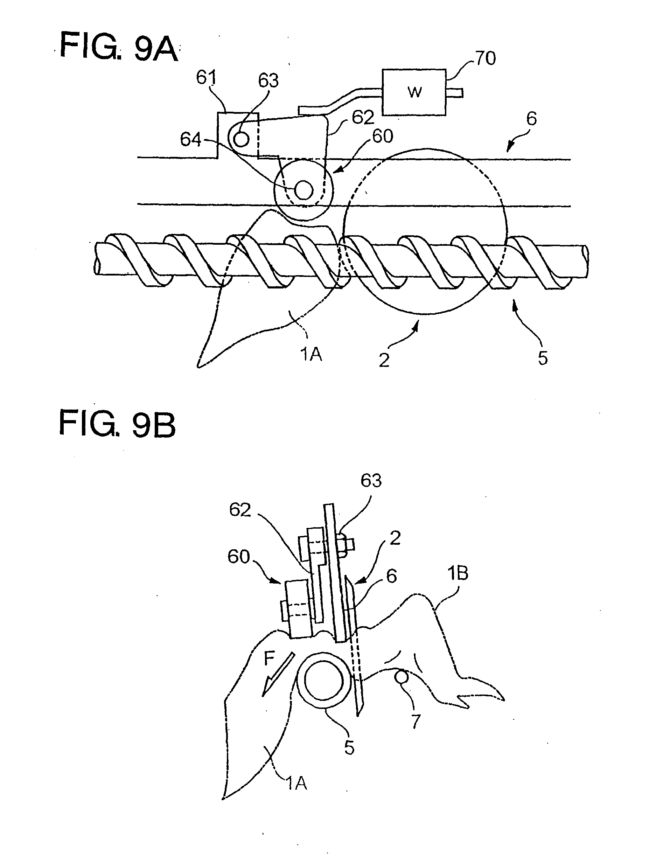

FIG. 8 through FIGs. 9A and 9B show outline of the chicken wing separation apparatus of Embodiment 2. FIG. 8 is a perspective view of the principal part of the apparatus for separating left and right wing from the breast meat. FIG. 9A is a cross sectional view seen along the board guide 6 as shown in FIG. 8. FIG. 9B is a cross sectional view near the rotary blade 2 as shown in FIG. 8.

The constructions of the following constituent elements are the same as Embodiment 1: the two helical guide screw axes (helical moving axes) 5, 5 extending in parallel; the board guides 6,6 positioned over the helical axes 5, 5 and moreover obliquely toward the inner center between of the helical axes 5, 5; the rotary blades 2,2 coming near the hollow 6b at the board guides 6, 6. However, the guide bar 7 disposed obliquely under the helical moving axis 5 and at the outer side of the helical moving axis 5 is not shown.
Embodiment 2 is different from Embodiment 1 in that there is disposed in front of the rotary blade 2 a roller 60 for giving a pressure for pressing the breast meat 1 toward the helical moving axis 5 by using a weight 70 disposed inside the board guide 6.
Concretely, the upper edge of the board guide 6 is projected like a shape of an inverse "T" letter shape at the upstream of the hollow 6b along the helical moving axis 5. There is provided, at an inner side of the board guide 6, at the projected
portion of the "T" letter shape 61, a support arm 62 of an inverse "L" letter shape which rotates and fluctuates along an approaching direction or separating direction to and from the helical moving axis 5 over the helical moving axis 5. The weight 70 is fixed on the upper surface of the support arm 62, while the roller 60 is supported by a rotation axis 64. The roller 60 presses the upper surface of the breast meat 1 positioned inside and over the helical axis 5.

As shown in FIG. 8, Embodiment 2 is same as Embodiment 1 in that the inlet guide 6a bent toward the inner side in the board guide 6,6 is omitted. However, in Embodiment 2, the board guides 6, 6 is not slanted toward the inner side from the upward direction vertical to the helical moving axis at the rotary blade position (the board guides 6, 6 are not arranged in a slanted shape gradually widened toward the downward direction). In place of Embodiment 1, the board guides 6, 6 extend in parallel According to the above-mentioned construction, the breast meat is more intensely rolled in the helical moving axis by the pressure of the roller 60, thereby separating the breast meat from the rotary blade and minimizing the quantity of the breast meat left at the shoulder joint of the cut-out chicken wing.

Embodiment 2 can automatically process the breast meat regardless of the size of the chicken, because the roller together with the weight exerts the pressure to the breast meat. The support arm 62 freely fluctuates, thereby having a degree of freedom along the upward and downward directions in accordance with the thickness of the breast meat.
Further, the board guides 6, 6 are slanted toward the inner direction at least at the position of the rotary blade 2, 2 and moreover have hollows 6b, 6b at the outside surfaces of the board guides 6, 6, in order to make the rotary blade 2, 2 intrude the board guides 6, 6. Further, similarly to Embodiment1, the board guides 6, 6 may be slanted toward the inner sides, along their whole length or only at the rotary blade position.

### Industrial Applicability

According to the chicken wing separation apparatus and method for the poultry, the tolerance of the size of the poultry (variation of the radius of the joint) is wide, thereby reducing rejected products which would have been generated, for example, by cutting the bone at the root of the chicken wing at the upper end of the shoulder joint.

## Claims

1. A chicken wing separation method wherein bone of a breast meat side is removed in a pre-process step, but a chicken wing is still attached to said breast meat, which comprises the steps of:
supporting said breast meat with chicken wings at two points from arm pits on two parallel helical moving axes, left and right of said chicken wings being parallel along a direction vertical to said two parallel helical moving axes;
positioning tendons of said breast meat corresponding to said arm pits by board guides extending along and above said helical moving axes; and
cutting joints of said chicken wings by rotary blades disposed near said board guides.

2. The method according to claim 1, wherein:
a distance between said board guides are made gradually narrower along a moving direction of helical grooves of said helical moving axes; and
said tendons are positioned by pushing said board guides toward said tendons.

3. The method according to claim 1 or 2, wherein said breast meat is pushed by pushing forces toward said helical moving axes directly in front of said rotary blades.

4. The method according to claim 3, wherein said pushing forces are generated by gravity forces and fluctuated upward or downward toward upper surfaces of said helical moving axes.

5. The method according to claim 1 or 2, wherein:
said board guides are slanted toward inner center between said helical moving axes; and
said joints of said chicken wings are cut by said rotary blades disposed near said slanted plane.

6. The method according to claim 5, wherein:
an outer side surface of said slanted plane has a hollow at a position where said rotary blades is disposed; and
said joints of said chicken wings are cut by said rotary blades.

7. The method according to claim 1, which further comprises the steps of:
grasping said breast meat with chicken wing separated from a body in said pre-process step, said body being grasped by a grasping apparatus;
delivering said breast meat to a delivering apparatus, said breast meat being still grasped by said grasping apparatus; and
introducing said breast meat with chicken wing into a chicken wing separation step.

8. A chicken wing separation apparatus, wherein, in a pre-process step, bone is removed from a breast meat in a pre-process step and said breast meat with chicken wing is transported by helical moving axes, which comprises:
two parallel helical moving axes for supporting said breast meat with chicken wing at two points from arm pits on two parallel helical moving axes, left and right of said chicken wings being parallel with along a direction vertical to said two parallel helical guide moving axes;
board guides extending along and above said helical moving axes; and
rotary blades disposed near outer side surfaces of said board guides,
wherein:
said breast meat with chicken wing is positioned and supported, by rotations of said two parallel helical moving axes, between said board guides;
said breast meat with chicken wing is transported toward said rotary blades; and
left and right wing of said chicken wing are cut by said rotary blades and are separated from said breast meat.

9. The apparatus according to claim 8, wherein:
said board guides are made gradually narrower along a moving direction of helical grooves of said helical moving guides; and
said board guides are slanted toward inner center between said helical moving axes.

10. The apparatus according to claim 8 or 9, which further comprises a pushing force generation means for pushing said breast meat toward said helical moving axes directly in front of said rotary blades.

11. The apparatus according to claim 10, wherein said pushing force generation means comprises:
left and right rotating support arms supported by said left and right board guides, respectively;
left and right weights or springs disposed on left and right upper surfaces of said left and right support arms for giving pressures to said left and right rotating support arms, respectively; and
left and right breast meat pressing members of rollers or sleighs disposed at left and right lower sides of said left and right rotating support arms which said breast meat contacts.

12. The chicken wing separation apparatus according to claim 8,
wherein:
said board guides are slanted, at least at a position of said rotary blade, toward inner center between said helical moving axes; and
there is formed on an outer side of said board guide a hollow for receiving said rotary blade and disposing said rotary blade in parallel to an outer side surface of said board guide.

13. The chicken wing separation apparatus according to claim 8, which further comprises guide bars disposed, in parallel to said helical moving axes, and moreover obliquely under and at outer sides of said helical moving axes, wherein said guide bars are bent toward outer sides in order to avoid interference with said rotary blades.

14. The chicken wing separation apparatus according to claim 8, which further comprises a delivery apparatus for introducing, into said helical moving axes, said breast meat with chicken wing separated from a body which is grasped by a grasping apparatus, in a pre-process step for separating a bone of said breast meat, said delivery apparatus comprising:
a receiving space for receiving said breast meat with chicken wing;
a pair of guide frames, wherein an opening is provided at a breast meat separation step side for receiving, at said receiving space, said breast meat with chicken wing, chicken wing roots of said breast meat with chicken wings are being still grasped by said grasping apparatus, and said breast meat with chicken wing is introduced into said helical moving axes along guide routes; and
left and right pushing-in means for pushing out said breast meat with chicken wing introduced into said space toward said helical moving axes along introduction routes.

15. The chicken wing separation apparatus according to claim 14,
wherein:
each of said guide route comprises: a liner guide route opened at said breast meat separation step side; and an arch guide route connected with a downstream of said linear guide route, wherein there is, between said linear guide route and said arch guide route, a step for stopping said breast meat of which chicken wing root is grasped by said grasping apparatus, and
said pushing-in means comprises: a pushing-in arm for holding, at said opening of said linear guide route, said breast meat with chicken wing stopped at said step, being disposed reciprocating along said linear guide route in a space between said guide frames; and left and right rotating arms for pushing said breast meat with chicken wing stopped at said step, into left and right of said helical moving axes through left and right of said arch guide route.
